Europäisches Patentamt

(19) European Patent Office

Office européen des brevets

(11) Numéro de publication: **0 080 400**
A1

## (12) DEMANDE DE BREVET EUROPEEN

(21) Numéro de dépôt: 82402074.7

(22) Date de dépôt: **12.11.82**

(51) Int. Cl.³: **G 09 B 15/00**

(30) Priorité: **16.11.81 FR 8121394**

(43) Date de publication de la demande: **01.06.83**
**Bulletin 83/22**

(84) Etats contractants désignés: **AT BE CH DE GB IT LI LU NL SE**

(71) Demandeur: **Dadi, Max Meyer, 23, Rue Jean Jaguin, F-94000 Creteil (FR)**
Demandeur: **Dadi, Marcel, 23, Rue Jean Jaguin, F-94000 Creteil (FR)**

(72) Inventeur: **Dadi, Max Meyer, 23, Rue Jean Jaguin, F-94000 Creteil (FR)**
Inventeur: **Dadi, Marcel, 23, Rue Jean Jaguin, F-94000 Creteil (FR)**

(54) **Règle à composer ou décomposer les accords pour tout instrument de musique polyphonique.**

(57) a) Règle à composer ou décomposer les accords pour instrument de musique polyphonique,

b) caractérisée en ce qu'elle comporte:

- des réglettes (A, B, C, D, E, F, P; Q) mobiles les unes par rapport aux autres dans une direction donnée et pourvues chacune des inscriptions relatives aux notes de la gamme chromatique, affectées respectivement à la fondamentale, la tierce, la quinte, la sixte, la septième etc. d'un accord,
- un curseur (K, N) mobile relativement dans cette direction donnée par rapport aux réglettes, ce curseur étant pourvu d'un repère (L, N5) positionné pour mettre en évidence une des notes de la gamme chromatique de chacune des réglettes,
- un élément (H) solidaire de la réglette (A, P7 affectée à la fondamentale comportant un repère (J) positionné pour mettre en évidence les inscriptions relatives à l'accord musical recherché,

c) L'invention s'applique à une règle à accords pour instrument de musique polyphonique.

face A

ACTORUM AG

EP 0 080 400 A1

0080400

"Règle à composer ou décomposer les accords pour tout instrument de musique polyphonique".

————————————

L'invention concerne une règle à composer ou décomposer les accords pour tout instrument de musique polyphonique.

Dans les règles à accords déjà connues, l'accord est pris dans son ensemble : sur un premier plan figurent les éléments fixes, à savoir le nom de l'accord accompagné d'une fenêtre pour la fondamentale et suivi d'un nombre de fenêtres égal au nombre de notes composant l'accord et séparées entre elles par des intervalles caractéristiques de l'accord; sur un second plan mobile se trouve la gamme chromatique pour l'affichage des notes dans les fenêtres.

Ce principe est utilisable pour toute fonction du premier degré et est beaucoup utilisé pour les tables de conversion.

L'inconvénient majeur de ces règles est qu'il faut obligatoirement y faire figurer le catalogue complet des accords, ce qui rend difficile et fastidieux leur utilisation. Toutes ces règles sont donc incomplètes et sélectives pour rester lisibles.

L'invention a notamment pour but de remédier à ces inconvénients et concerne à cet effet, une règle à composer ou décomposer des accords pour instrument de musique polyphonique caractérisée en ce qu'elle comporte :

- des réglettes, mobiles les unes par rapport aux autres dans une direction donnée et pourvues chacune des inscriptions relatives aux notes de la gamme chromatique affectées respectivement à la fondamentale, la tierce, la quinte, la sixte, la septième, etc.. d'un accord,

- un curseur mobile relativement dans cette direction donnée par rapport aux réglettes, ce curseur étant pourvu d'un repère positionné pour mettre en évidence une des notes de la gamme chromatique de chacune des réglettes,

- un élément solidaire de la réglette affectée à la fondamentale comportant un repère positionné pour mettre en évidence les inscriptions relatives à l'accord musical recherché, ces inscriptions sont portées sur toutes les réglettes sauf sur celle solidaire de cet élément, les inscriptions des réglettes relatives à la gamme chromatique, ainsi que leurs inscriptions relatives aux accords musicaux étant positionnées les unes par rapport aux autres et par rapport au repère du curseur et au repère de l'élément de manière telle que pour un accord affiché par le repère de l'élément, le repère du curseur mette en évidence les notes de cet accord pour la fondamentale choisie.

Suivant une autre caractéristique de l'invention, les repères de l'élément et du curseur présentent chacun deux zones, la largeur de l'une des zones étant le double de l'autre, la zone la plus large du repère du curseur se déplaçant relativement par rapport aux trois réglettes affectées respectivement à la fondamentale, la tierce, et la quinte d'un accord, la zone la plus large du repère de l'élément pour l'affichage de l'accord se déplace relativement par rapport aux deux réglettes affectées à la tierce et la quinte, les zones les moins larges du repère de l'élément et du curseur se déplacent relativement par rapport à l'ensemble des réglettes restantes et affectées aux accords sixième, septième, neuvième, etc...

Suivant une autre caractéristique de l'invention, le repère de l'élément et du curseur est réalisé sous la forme d'une fente perpendiculaire à la direction de déplacement du curseur et des réglettes.

Suivant une autre caractéristique de l'invention, l'élément pourvu de la fente est réalisé en matériau transparent et les réglettes sous-jacentes sont pourvues, de chaque côté de la position de l'accord majeur parfait, des inscriptions relatives à tous les autres accords, ces inscriptions étant visibles au travers de l'élément en matériau transparent.

Suivant une autre caractéristique de l'invention, les réglettes sont pourvues de divisions transversales délimitant des cases, les cases des trois réglettes affectées respectivement à la fondamentale, la tierce et la quinte d'un accord comportant chacune une note de la gamme chromatique et étant de largeur double des cases des réglettes restantes et affectées aux accords sixième, septième, neuvième, etc. les cases de ces réglettes restantes comportant une case vide entre chacune des cases avec note.

Suivant une autre caractéristique de l'invention, les réglettes sont chacune solidaire d'une feuille, les différentes feuilles étant superposées tandis que le curseur comporte une représentation de la partie de commande d'un instrument de musique, manche de guitare, clavier, etc.. située au-dessus des feuilles, cette représentation étant transparente à hauteur des positions des doigts permettant d'obtenir une note, tandis que les feuilles sont pourvues d'une part, de zones transparentes, d'autre part, de repères correspondant à ces positions et relatifs, pour chaque feuille, à toutes les positions des doigts qui permettent d'obtenir la note de sa réglette affichée par le curseur.

L'invention est représentée, à titre d'exemple non limitatif, sur les dessins ci-joints, dans lesquels :

- la figure 1a est une vue en élévation de la face supérieure de la règle,

- la figure 1b est une vue de droite de la figure 1a,

- la figure 1c est une vue partielle agrandie de la figure 1a,

- la figure 2 est une vue de dessous de la figure 1a,

- la figure 3 est une vue en élévation de la face arrière de la règle,

- la figure 4 est une vue de dessus de la figure 1a,

- la figure 5 est une vue agrandie de dessus du curseur de la figure 1a,

- la figure 6 est une coupe suivant B - B' de la figure 5,

- la figure 7 est une coupe suivant A - A' de la figure 5,

- la figure 8 est une vue en élévation du curseur d'un mode de réalisation de la règle, pour un instrument à clavier,

- la figure 9 est une vue en élévation de la structure de support de la règle de la figure 1a,

- la figure 9a est une vue de droite de la figure 9,

- la figure 10 est une vue en élévation de l'une des réglettes mobiles de la règle de la figure 1a,

- la figure 10a est une vue de droite de la figure 10,

- les figures 11 et 12 sont des vues en élévation des deux réglettes mises en oeuvre avec le curseur de la figure 8, pour l'application de la règle aux instruments à clavier.

Pour bien comprendre la construction de la règle conforme à l'invention, il faut rappeler que :

- un accord parfait comporte au moins trois notes: la fondamentale, la tierce, la quinte,

- un accord sixième comprend ces mêmes trois premières notes plus la sixte,

- un accord septième ou septième majeure comprend toujours les mêmes trois premières notes plus la septième ou la septième majeure,

- quand un accord est neuvième, neuvième moins ou neuvième plus, il est également déjà septième,

- quand un accord est onzième ou onzième plus, il est également déjà neuvième et septième,

- quand un accord est treizième, il est également déjà onzième, neuvième et septième,

- quand un accord est quinzième, il est également déjà treizième, onzième, neuvième et septième,

- quand dans l'appellation d'un accord, on ne précise pas mineur ou sus 4, il est sous- entendu être majeur,

– quand un accord est diminué, la tierce, la quinte et la septième sont descendues d'un demi-ton,

Afin d'éviter toute confusion avec les lettres et chiffres portés sur la règle elle-même, les références aux dessins incluses dans la présente description seront constituées par des lettres en caractères majuscule soulignées.

Egalement, chaque fois que dans la présente description, on utilise le terme "gamme chromatique", il est sous entendu que toutes les notes de cette gamme sont inscrites dans l'ordre de la gamme.

La règle est composée de trois parties :

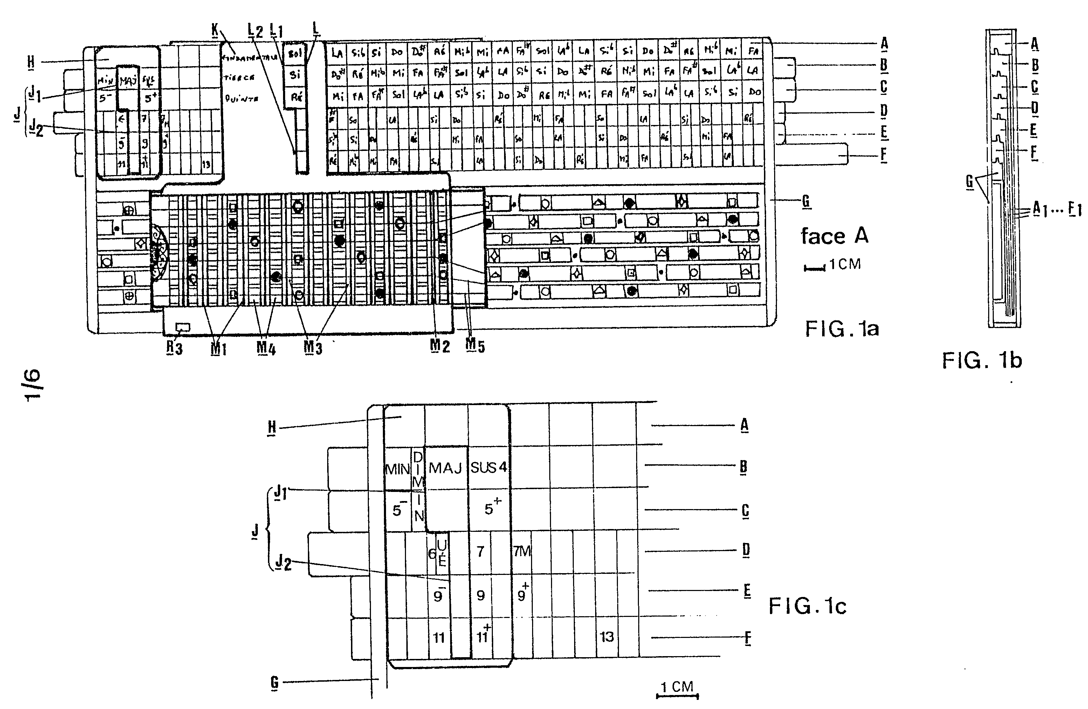

– la première partie permet par l'affichage du nom d'un accord donné, la lecture au moyen d'un curseur des notes qui composent cet accord (voir notamment figure 1a, moitié supérieure),

– la deuxième partie affiche automatiquement la position des doigts sur l'instrument, des notes affichées par le curseur (voir notamment figure 1a, moitié inférieure)

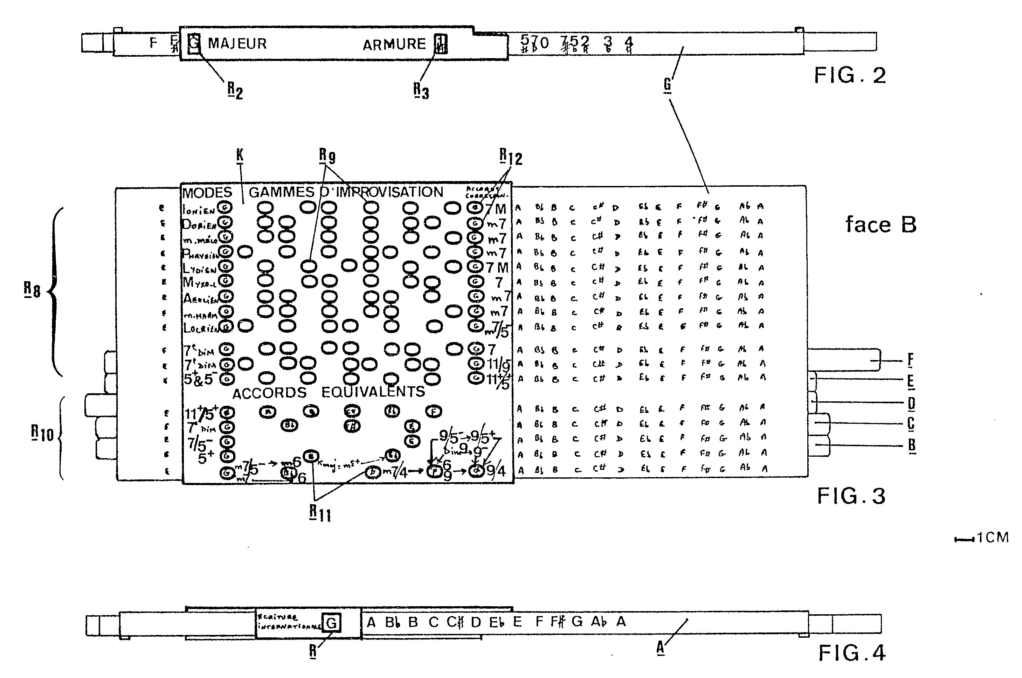

– la troisième partie affiche les gammes d'improvisation à partir de la fondamentale choisie sur le curseur, les accords équivalents entre eux, la tonalité d'une partition à partir de l'armure de la clé, ainsi que l'écriture internationale des notes (voir figures 2, 3 et 4).

Dans l'exemple de réalisation de la règle appliqué à la guitare et représenté sur les figures 1a à 7 et 9 à 10a, la première partie est composée de six réglettes d'égale largeur (un centimètre dans l'exemple représenté) $\underline{A}$, $\underline{B}$, $\underline{C}$, $\underline{D}$, $\underline{E}$, $\underline{F}$. La première $\underline{A}$ est fixe par rapport à la structure de support $\underline{G}$, cet élément étant pourvu d'une fenêtre $\underline{J}$ permettant l'affichage de l'accord recherché au moyen des réglettes $\underline{B}$, $\underline{C}$, $\underline{D}$, $\underline{E}$, $\underline{F}$.

Cette fenêtre présente deux zones $\underline{J1}$ et $\underline{J2}$, la largeur de la zone $\underline{J1}$ située à hauteur des réglettes $\underline{B}$ et $\underline{C}$ étant le double de la largeur de la zone $\underline{J2}$ située à hauteur des réglettes $\underline{D}$, $\underline{E}$ et $\underline{F}$.

Dans l'exemple représenté, la fenêtre est d'un centimètre de largeur à hauteur des réglettes $\underline{B}$ et $\underline{C}$ et de 0,5 centimètre de largeur pour les réglettes $\underline{D}$, $\underline{E}$ et $\underline{F}$.

Les réglettes $\underline{A}$, $\underline{B}$, $\underline{C}$ sont divisées transversalement par des lignes de repère (voir figure 1a) délimitant des cases qui, dans l'exemple représenté, ont une largeur égale à un centimètre.

Par contre, les réglettes $\underline{D}$, $\underline{E}$ et $\underline{F}$ sont divisées transversalement par des lignes de repère délimitant des cases dont la largeur est égale à 0,5 centimètre.

Dans la présente description, on entend par case des zones délimitées par des lignes de repère transversales qui peuvent être, soit réelles, soit virtuelles.

Pour établir les inscriptions portées dans les cases des réglettes, compte tenu de la position de l'élément $\underline{H}$ sur la réglette $\underline{A}$, on part arbitrairement d'une position de base qui est l'accord parfait majeur.

Pour cette position de base, la fenêtre $\underline{J}$ permet de lire sur la réglette $\underline{B}$ le symbole "MAJ" qui signifie majeur, tandis que les cases des règles $\underline{C}$, $\underline{D}$, $\underline{E}$ et $\underline{F}$ apparaissant au travers de la fenêtre $\underline{J}$ sont vides et colorées (en gris par exemple) pour les reconnaître.

Sur la case de la réglette $\underline{B}$, qui précède le symbole "MAJ", est imprimé le symbole "MIN" qui signifie mineur et sur la case qui suit, le symbole "SUS4".

Sur la réglette $\underline{C}$, la case grise est précédée du symbole "$5^-$" qui signifie quinte diminuée, et suivie du symbole "$5^+$" qui signifie quinte augmentée.

Sur la réglette $\underline{D}$, la case grise est précédée du symbole "6e" et est suivie du symbole "7e", puis après une case vide, du symbole "7eM" qui signifie 7e majeure.

Sur la réglette $\underline{E}$, la case grise est précédée du symbole "$9^-$" (neuvième diminuée) et suivie du symbole "9e" puis après une case vide du symbole "$9^+$" (neuvième augmentée).

Sur la réglette $\underline{F}$, la case grise est précédée du symbole "11e" et suivie du symbole "$11^+$" (onzième augmentée)

0080400

puis après cinq cases vides, du symbole "13e".

Les accords diminués sont obtenus en affichant leš positions "MIN", "5⁻", "6e" pour mieux les reconnaître, le mot "DIMINUE" est imprimé verticalement à cheval sur ces trois cases apparaissant dans la fenêtre J.

Sur le reste des cases des réglettes, sont imprimées dans l'ordre, de gauche à droite, les notes de la gamme chromatique DO, REb, MIb, MI, FA, SOLb, SOL, LAb, LASIB, SI, DO sans laisser de case vide pour les réglettes A, B, C et en laissant une case vide entre chaque note sur les réglettes D, E et F.

Des gammes chromatiques sont établies dans les cases des six réglettes et positionnées entre elles de telle manière que lorsque, par exemple, l'accord 11e est affiché sur la fenêtre J (c'est-à-dire : "MAJ", "7e", "9e", "11e") et donc que, au travers de cette fenêtre J, apparaissent "MAJ" de la réglette B, la case grise de la réglette C, "7e" de la réglette D, "9e" de la réglette E et "11e" de la réglette F. Dans ce cas, on trouve à hauteur du DO de la réglette A, le MI de la réglette B, le SOL de la réglette C, le SIb de la réglette D, en regard de la moitié droite de la case qui marque le SOL de la réglette C, RE sur la réglette E sous le SIb, et FA sur F sous le RE (voir figure 1a).

Le curseur K comporte également un cache qui, à hauteur des réglettes A, B, C, D, E et F est pourvu d'une fenêtre L qui comme la fenêtre J se divise en deux zones L1 et L2 : la zone L1 est située à hauteur des réglettes A, B, C et est de largeur double (un centimètre) de la largeur de la zone L2 située à hauteur des réglettes D, E et F.

En liaison avec le cache et la fenêtre L du curseur K, la réglette A donne la fondamentale, la réglette B donne la tierce et la réglette C donne la quinte.

En affichant la fondamentale choisie dans la fenêtre L du curseur K, on peut donc lire en-dessous les notes qui composent l'accord affiché dans la fenêtre J.

Ainsi, l'accord est progressivement construit à à partir de sa simple appellation, note par note. Ceci présente donc un double intérêt : tout d'abord un intérêt de commodité d'utilisation par sa lisibilité et la possibilité de décomposer tous les accords sans limitation, ensuite un intérêt pédagogique puisque l'on comprend la signification de l'appellation d'un accord et comment on passe de l'un à l'autre.

Suivant le mode de réalisation décrit et représenté sur les dessins, on a, par simplification, figuré sur la même réglette D la "6e" et la "7e", ce qui rend impossible l'affichage des accords 7/6. En fait, il suffit de savoir que la "13e" et la "6e" représentent la même note à l'octave pour remplacer l'affichage 7/6 par 7/13.

Par ailleurs, sur la guitare, on ne peut jouer plus de six notes à la fois (six cordes), ce qui fait qu'on ne peut jouer pleinement que les accords jusqu'au onzième (altéré ou non altéré). Pour les accords "13e" qui comportent en réalité sept notes, on supprime habituellement la onzième : c'est pour cette raison que "13e" est figuré sur la même réglette que "11e".

Les accords "15e" ne sont pas utilisés à la guitare.

Donc, sur le plan purement solfège, il faudrait en fait neuf réglettes (une pour la fondamentale, une pour la tierce, une pour la quinte, une pour la sixième, une pour la septième, une pour la neuvième, une pour la onzième, une pour la treizième, une pour la quinzième) : c'est ce qui est utile pour le piano par exemple ou pour la guitare lorsqu'il s'agit d'accords tronqués volontairement.

La deuxième partie de la règle consiste en l'affichage de la position des doigts sur l'instrument (une guitare dans l'exemple de la figure 1a) en fonction des notes affichées sur la fenêtre du curseur. Chaque réglette A, B, C, D, E et F, est par ailleurs solidaire (voir figures 1a et 1b) par sa face postérieure d'une feuille rigide fine A1, B1, C1 ... F1, qui peut être en matière plastique ou en métal. Ces six feuilles sont superposées de telle façon que la feuille A1, solidaire de la réglette A, est fixe comme cette réglette et solidaire de la structure G de la règle dont elle constitue ainsi le plan profond. Puis viennent se superposer dans l'ordre les feuilles B1 de B, C1 de C, D1 de D, E1 de E et F1 de F.

Les épaisseurs des réglettes sont dégressives en partant de A vers F de façon à ce que la face avant des réglettes soit sur un même plan.

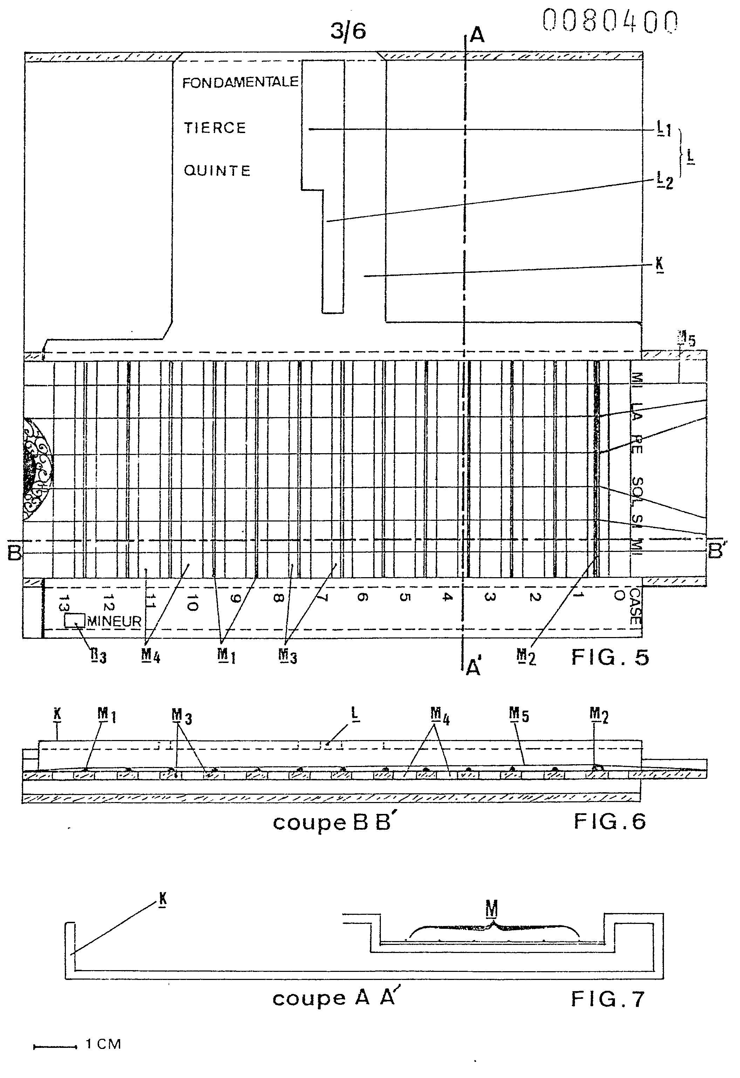

A hauteur de la moitié inférieure de la face antérieure de la règle (figure 1a), le curseur K représente en M la face avant du manche de la guitare, la tête étant à droite (figure 5).

Chaque barrette M1 du manche est donc perpendiculaire aux réglettes et est séparée de sa voisine par un intervalle de un centimètre.

Sur 2,5 millimètres de part et d'autre de chaque barrette M1, ainsi que du sillet M2, le curseur est opaque en M3. Entre ces zones opaques M3, le curseur est transparent ou forme des fenêtres M4 (figures 5 et 6) qui permettent de lire sur les feuilles A1, B1, C1, D1, E1, F1.

Sur les barrettes M1 et le sillet M2 sont dessinées les six cordes M5 de la guitare, la sixième en haut étant la corde MI grave, puis en descendant : LA, RE, SOL, SI, MI (chanterelle).

Les cases entre les barrettes M1 sont numérotées de droite à gauche de 0 à 13, le 0 étant la corde jouée à vide (figure 5).

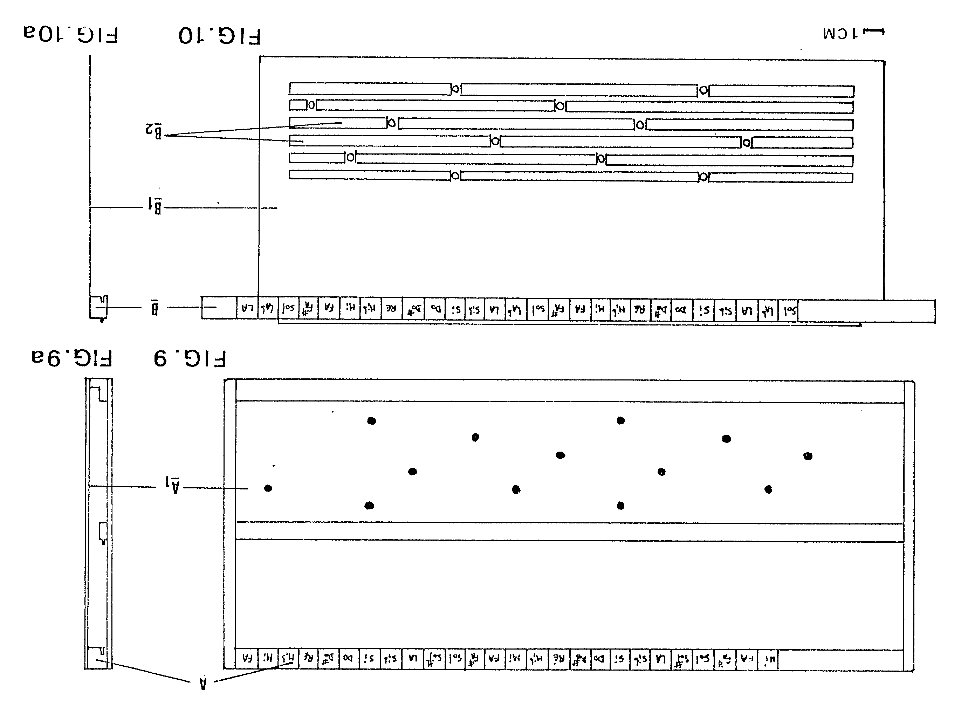

Sur la feuille A1 (voir figures 9 et 9a) sont imprimées, en regard des fenêtres M4 entre les barrettes M3 toutes les positions des doigts sur la guitare qui permettent d'obtenir la note fondamentale affichée dans le haut de la fenêtre L du curseur K, ces positions sont représentées par le symbole " ● ".

Ainsi, par exemple, pour la note SOL affichée par le curseur sur la réglette A (voir figure 1a) apparaissent, sur la représentation de la guitare, entre les barrettes M1 les symboles " ● " pour les positions suivantes :

0080400

6e corde case 3

5e corde case 10

4e corde case 5

3e corde case 0

2e corde case 8

1e corde case 3

On s'aperçoit que si on déplace le curseur de gauche à droite d'un demi-ton, c'est-à-dire d'une case (un centimètre), le curseur affiche LAb et tous les symboles " • " se sont déplacés relativement de droite à gauche d'une case sur la guitare : le LAb est ainsi obtenu en jouant les notes suivantes :

6e corde case 4

5e corde case 11

4e corde case 6

3e corde case 1

2e corde case 9

1e corde case 4

Donc tout mouvement du curseur s'accompagne d'un mouvement relatif inversé et équivalent en amplitude du symbole de la note à jouer.

De même pour la feuille B1 (voir figures 10 et 10a) le symbole "0" est imprimé aux positions des doigts correspondant à la note (tierce) affichée par la réglette B au travers de la fenêtre L du curseur K.

Entre les symboles "0", la feuille est perforée suivant des fentes B2 hautes de 0,5 centimètre alignées et se positionnant à hauteur de la figuration des cordes M5 dessinées sur le curseur. Les fentes B2 permettent de lais-ser voir les symboles " • " du plan inférieur.

On procède de même pour les autres feuilles :

- on utilise le symbole " ▢ " pour la feuille C1
- on utilise le symbole " ◇ " pour la feuille D1
- on utilise le symbole " △ " pour la feuille E1
- on utilise le symbole " • " pour la feuille F1

Pour les feuilles D1, E1 et F1, lorsqu'aucune note n'est affichée dans la fenêtre L du curseur K (espace vier-

ge entre deux notes sur les réglettes D, E, F), aucun symbole n'apparaît à hauteur de la représentation M de la guitare; ils sont en effet cachés par les zones opaques M3.

Ainsi, pour chaque accord cherché, le curseur K permet de donner simultanément le nom des notes qui le composent et toutes les positions des doigts sur l'instrument pour obtenir cet accord. Le choix de la position et la façon de placer les doigts n'est qu'une question de technique qui s'acquiert très vite avec un peu de pratique.

Les caractéristiques de l'invention pourront être mises en oeuvre pour réaliser des règles utilisables pour composer des accords à l'aide d'instruments de musique très divers.

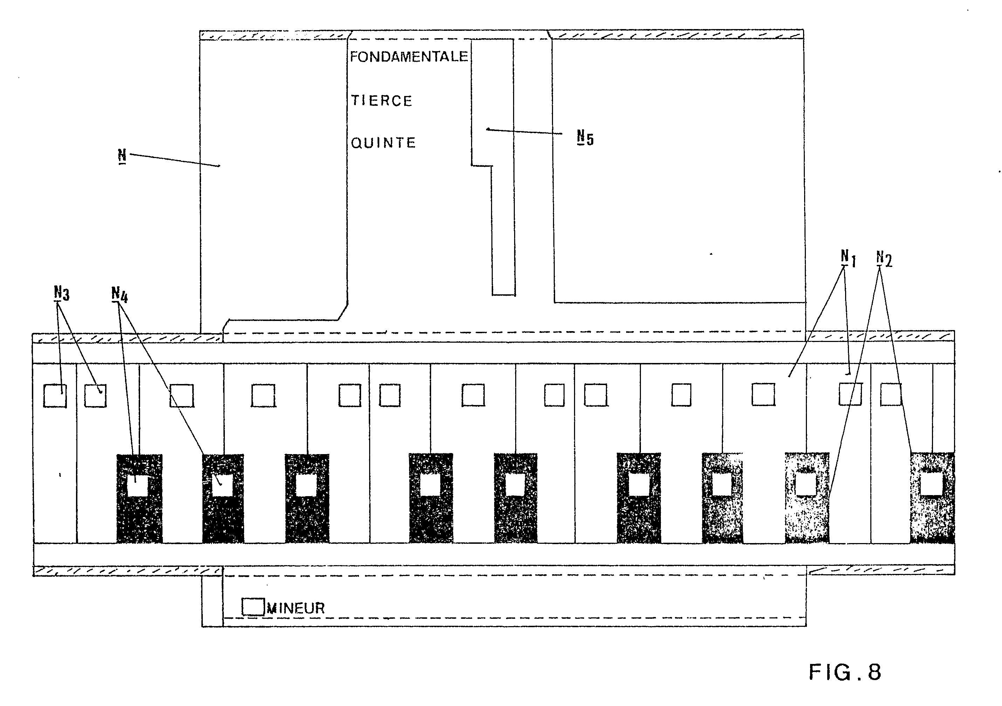

Suivant les figures 8, 11 et 12, il est ainsi représenté une règle applicable au piano, orgue, ou tout instrument à clavier.

Dans ce cas, le curseur N (figure 8) est modifié dans sa partie inférieure pour représenter un clavier à l'envers. En effet, sur un clavier, on va du grave vers l'aigu en jouant de gauche à droite. Les symboles des notes sur les feuilles P1, Q1 des réglettes P, Q se déplacent de droite à gauche quand on affiche des notes plus aiguës sur le curseur N . Pour coordonner les mouvements on a donc deux possibilités, soit retourner le clavier et conserver le sens d'écriture des gammes chromatiques sur les réglettes, soit inversement conserver le clavier à l'endroit et inverser le sens d'écriture des gammes chromatiques sur les réglettes.

Chaque touche blanche N1 ou noire N2 est perforée d'un carré de 5 mm x 5 mm, respectivement N3, N4 pour permettre la visualisation des notes à jouer.

La largeur des touches est modifiée pour rendre l'intervalle entre deux touches fonction de l'intervalle entre deux notes des réglettes.

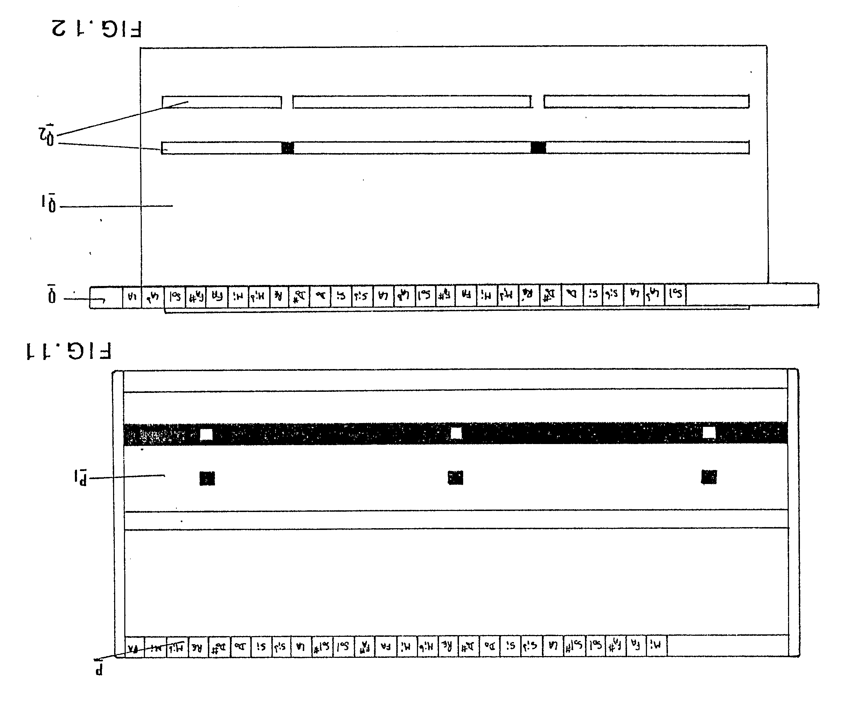

Sur la feuille P1 (voir figure 11) de la réglette P, sont représentées les positions de la note fondamentale de la réglette P affichée sur le haut de la fenêtre N5 du curseur. Chaque note est figurée sur deux niveaux superposés sur les deux feuilles P1, Q1, une pour les touches blanches, une pour les touches noires. Sur le premier niveau, les notes figurent en noir sur fond blanc, sur le niveau inférieur, les notes figurent en blanc sur fond noir.

Ainsi, lorsqu'une touche blanche ne doit pas être jouée, la fenêtre du curseur reste blanche et lorsqu'elle doit être jouée ., elle apparaît noire et inversement pour les touches noires.

Sur la feuille Q1 (voir figure 12) de la réglette, on procède de même. Comme pour les feuilles prévues pour la guitare, l'intervalle entre deux notes est formé par des fentes Q2 pour permettre la lecture des notes des plans inférieurs.

On procède de même pour toutes les réglettes.

Sur les figures 11 et 12, par simplification, il n'a pas été fait de distinction de représentation entre les notes pour les différencier. En fait, quel que soit l'instrument, dans la pratique, la différence peut être marquée par un jeu de couleurs différentes en donnant la même couleur pour la réglette et la note figurée sur la feuille correspondante.

Jusqu'à présent, la meilleure façon de représenter les positions des doigts pour jouer un accord sur un instrument consistait à représenter chaque accord sur une figure différente de l'instrument, ce qui n'est pas pratique d'utilisation du fait du nombre important d'accords existants.

L'intérêt de la présente invention consiste en ce que la même figure de l'instrument (ici le curseur) permet la visualisation de tous les accords d'une façon très lisible et permet la visualisation sur l'instrument de toutes les notes que l'on affiche sur le curseur : c'est-à-dire que l'on peut également afficher sur la moitié supérieure du curseur une gamme donnée, la visualiser sur l'instrument et au moyen du mouvement du curseur, transposer cette gamme dans une autre tonalité.

R E V E N D I C A T I O N S

1°) Règle à composer ou décomposer des accords pour instrument de musique polyphonique caractérisée en ce qu'elle comporte :

des réglettes (A, B, C, D, E, F, P, Q), mobiles les unes par rapport aux autres dans une direction donnée et pourvues chacune des inscriptions relatives aux notes de la gamme chromatique, affectées respectivement à la fondamentale, la tierce, la quinte, la sixte, la septième, etc. d'un accord,

- un curseur (K, N) mobile relativement dans cette direction donnée par rapport aux réglettes, ce curseur étant pourvu d'un repère (L, N5) positionné pour mettre en évidence une des notes de la gamme chromatique de chacune des réglettes,

- un élément (H) solidaire de la réglette (A, P) affectée à la fondamentale comportant un repère (J) positionné pour mettre en évidence les inscriptions relatives à l'accord musical recherché, ces inscriptions étant portées sur toutes les réglettes sauf sur celle solidaire de cet élément, les inscriptions des réglettes relatives à la gamme chromatique, ainsi que leurs inscriptions relatives aux accords musicaux étant positionnées les unes par rapport aux autres et par rapport au repère du curseur (K, N) et au repère de l'élément (H) de manière telle que pour un accord affiché par le repère (J) de l'élément (H), le repère (L, N) du curseur (K, N) mette en évidence les notes de cet accord pour la fondamentale choisie.

2°) Règle conforme à la revendication 1, caractérisée en ce que les repères de l'élément (H) et du curseur (K) présentent chacun deux zones (J1, J2 ; L1, L2), la largeur de l'une des zones étant le double de l'autre, la zone la plus large (L1) du repère du curseur se déplace relativement par rapport aux trois réglettes (A, B, C) affectées respectivement à la fondamentale, la tierce et la quinte d'un accord, la zone (J1) la plus large du repère de l'élément (J) pour l'affichage de l'accord se déplaçant relativement par rapport aux deux réglettes (B, C) affectées à la tierce et la quinte, les zones (J2, L2) les moins larges du repère de l'élément et du curseur se déplacent relativement par rapport à l'ensemble des réglettes restantes (D, E, F) et affectées aux accords sixième, septième, neuvième, etc.

3°) Règle conforme à la revendication 2, caractérisée en ce que le repère (J, L) de l'élément (H) et du curseur (K) est réalisé sous la forme d'une fente perpendiculaire à la direction de déplacement du curseur et des réglettes.

4°) Règle conforme à la revendication 3, caractérisée en ce que l'élément (H) pourvu de la fente (J) est réalisé en matériau transparent et les réglettes sous-jacentes sont pourvues, de chaque côté de la position de l'accord majeur parfait, des inscriptions relatives à tous les accords, ces inscriptions étant visibles au travers de l'élément en matériau transparent.

5°) Règle conforme à la revendication 2, caractérisée en ce que les réglettes (A, B, C, D, E, F, P, Q) sont pourvues de divisions transversales délimitant des cases ; les cases des trois réglettes (A, B, C) affectées respectivement à la fondamentale, la tierce et la quinte d'un accord comportent chacune une note de la gamme chromatique et étant de largeur double des cases des réglettes restantes (D, E, F) et affectées respectivement aux accords sixième, septième, neuvième, etc. ; les cases de ces réglettes restantes comportant une case vide entre chacune des cases avec note.

6°) Règle conforme à l'une quelconque des revendications précédentes, caractérisée en ce que les réglettes (A, B .. Q) sont rectilignes et mobiles par coulissement l'une par rapport à l'autre.

7°) Règle conforme à l'une quelconque des revendications précédentes, caractérisée en ce que les réglettes sont chacune solidaire d'une feuille (A1, B1, C1, D1, E1, F1, P1, Q1), les différentes feuilles étant superposées tandis que le curseur (K, N) comporte une représentation de la partie de commande d'un instrument de musique, manche, clavier, etc. située au-dessus des feuilles, cette représentation étant transparente à hauteur des positions (M4, N3, N4) des doigts permettant d'obtenir une note, tandis que les feuilles sont pourvues d'une part de zones transparentes, d'autre part de repères correspondant à ces positions et relatifs, pour chaque feuille, à toutes les positions des doigts qui permettent d'obtenir la note de sa réglette affichée par le curseur.

8°) Règle conforme à la revendication 7, caractérisée en ce que les zones transparentes des feuilles (B2, Q2) sont constituées par des fentes alignées avec les repères dans la direction de déplacement des réglettes.

9°) Règle conforme à l'une quelconque des revendications précédentes, caractérisée en ce que les repères de chaque feuille sont de nature différente.

10°) Règle conforme à l'une quelconque des revendications précédentes, caractérisée en ce que la réglette (A) pourvue des inscriptions relatives à la gamme chromatique affectée à la fondamentale solidaire de l'élément (H) est également solidaire d'une structure de support (G) de la règle.

11°) Règle conforme à 1une quelconque des revendications précédentes, caractérisée en ce que les inscriptions et repères relatifs aux gammes chromatiques, aux accords et à la position des doigts sont visibles sur une même face de la règle, la face opposée étant pourvue d'inscriptions relatives aux gammes d'improvisation des différents modes (R8) et aux accords équivalents (R10) en correspondance de repères (R9, R11) prévus sur la face en regard du curseur.

12°) Règle conforme à l'une quelconque des revendications précédentes, caractérisée en ce qu'elle est pourvue, sur l'un de ses champs, des inscriptions, en écriture internationale, des notes de la gamme, le champ en regard du curseur (K) étant pourvu d'un repère (R) pour la conversion en écriture internationale de la note fondamentale sélectionnée par le curseur sur la réglette (A, P).

13°) Règle conforme à l'une quelconque des revendications précédentes, caractérisée en ce qu'elle est pourvue, sur l'un de ses champs, des inscriptions des armures à la clé d'une partition et des inscriptions des tonalités majeures, tandis que l'une des faces de sa structure de support (G) est pourvue des inscriptions des tonalités mineures équivalentes, le curseur (K) comportant trois repères (R1, R2, R3) positionnés l'un par rapport à l'autre et affectés chacun à l'une de ces trois inscriptions pour indiquer la tonalité majeure et la tonalité mineure équivalente, correspondant à l'armure à la clé sélectionnée par le curseur.

face A

FIG.1a

FIG. 1b

FIG.1c

0080400

FIG. 2

face B

FIG. 3

FIG. 4

1CM

0080400

FONDAMENTALE

TIERCE

QUINTE

$\underline{L}_1$

$\underline{L}$

$\underline{L}_2$

$\underline{K}$

$\underline{M}_5$

MI LA RE SOL SI MI

B —— B'

13 | 12 | 11 | 10 | 9 | 8 | 7 | 6 | 5 | 4 | 3 | 2 | 1 | O | CASE

MINEUR

$\underline{R}_3$  $\underline{M}_4$  $\underline{M}_1$  $\underline{M}_3$  $\underline{M}_2$  FIG . 5

$\underline{K}$  $M_1$  $M_3$  $\underline{L}$  $M_4$  $M_5$  $M_2$

coupe B B'  FIG . 6

$\underline{K}$  $\underline{M}$

coupe A A'  FIG . 7

$\longmapsto$ 1 CM

FONDAMENTALE

TIERCE

QUINTE

$\underline{N}$

$\underline{N}_5$

$\underline{N}_1$  $\underline{N}_2$

$\underline{N}_3$  $\underline{N}_4$

☐MINEUR

FIG.8

FIG. 9

FIG. 9a

FIG.10

FIG.10a

0080400

FIG.11

FIG.12

Office européen
des brevets

**RAPPORT DE RECHERCHE EUROPEENNE**

EP 82 40 2074

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 09 B 15/00 |
| A | US-A-4 289 057 (R.R. WHITLOCK) * revendication 1; figure 1 * | 1 | |
| | --- | | |
| A | US-A-4 175 468 (R.R. WHITLOCK) | | |
| | --- | | |
| A | US-A-2 832 252 (I.C. GABRIEL) | | |
| | --- | | |
| A | US-A-3 481 241 (Y.A. GAILLARD) | | |
| | ----- | | |

### DOMAINES TECHNIQUES RECHERCHES (Int. Cl. ³)

G 09 B 15
G 10 G 1

Le présent rapport de recherche a été établi pour toutes les revendications

| Lieu de la recherche | Date d'achèvement de la recherche | Examinateur |
|---|---|---|
| LA HAYE | 09-02-1983 | PELSERS L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82